(19) Europäisches Patentamt
European Patent Office
Office européen des brevets

(11) **EP 4 521 530 A1**

(12) **EUROPEAN PATENT APPLICATION**
published in accordance with Art. 153(4) EPC

(43) Date of publication:
**12.03.2025 Bulletin 2025/11**

(21) Application number: **22943116.8**

(22) Date of filing: **25.05.2022**

(51) International Patent Classification (IPC):
**H01M 50/244** (2021.01)   **H01M 50/249** (2021.01)
**H01M 10/613** (2014.01)

(52) Cooperative Patent Classification (CPC):
**H01M 10/613; H01M 50/244; H01M 50/249**

(86) International application number:
**PCT/CN2022/095024**

(87) International publication number:
**WO 2023/225911 (30.11.2023 Gazette 2023/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **CONTEMPORARY AMPEREX
TECHNOLOGY
(HONG KONG) LIMITED
Hong Kong (HK)**

(72) Inventor: **XU, Hu
Ningde, Fujian 352100 (CN)**

(74) Representative: **Gong, Jinping
CocreateIP
Neumarkterstr. 21
81673 München (DE)**

(54) **BATTERY CELL, BATTERY, AND ELECTRICAL DEVICE**

(57)    This application provides a battery cell, a battery, and an electric apparatus. The battery cell includes a housing and at least one electrode assembly. The housing includes a first wall and a second wall, where the first wall and the second wall enclose a first accommodation space and at least one second accommodation space. The at least one electrode assembly includes a first electrode assembly arranged in the first accommodation space; where the first wall is bent along a circumferential direction of the first electrode assembly, the second wall is connected to an end of the first wall along the circumferential direction, a closed-loop virtual curved surface on which the first wall is located defines the first accommodation space, and a closed-loop virtual curved surface on which the first wall is located and the second wall define the at least one second accommodation space. The battery cell provided in embodiments of this application increases the space in the battery cell for accommodating an electrolyte and gas generated by the battery cell while ensuring the overall structural stability of the battery cell, which is conducive to prolonging the service life of the battery cell.

FIG. 4

# Description

## TECHNICAL FIELD

This application relates to the field of battery technologies, and more specifically, to a battery cell, a battery, and an electric apparatus.

## BACKGROUND

Batteries are widely used in electronic devices such as mobile phones, laptops, battery carts, electric vehicles, electric aircrafts, electric ships, electric toy cars, electric toy ships, electric toy aircrafts, and electric tools. Battery cells may include nickel-cadmium battery cells, nickel-hydrogen battery cells, lithium-ion battery cells, secondary alkaline zinc-manganese battery cells, and the like.

In the development of battery cell technology, in addition to improving the performance of battery cells, service life is also an issue that needs to be considered. Therefore, how service life of battery cells is improved is an urgent issue that needs to be addressed in battery technology.

## SUMMARY

This application provides a battery cell, a battery, and an electric apparatus to improve the service life of battery cells.

According to a first aspect, an embodiment of this application provides a battery cell, including a housing and at least one electrode assembly. The housing includes a first wall and a second wall, where the first wall and the second wall enclose a first accommodation space and at least one second accommodation space. The at least one electrode assembly includes a first electrode assembly arranged in the first accommodation space; where the first wall is bent along a circumferential direction of the first electrode assembly, the second wall is connected to an end of the first wall along the circumferential direction, a closed-loop virtual curved surface on which the first wall is located defines the first accommodation space, and a closed-loop virtual curved surface on which the first wall is located and the second wall define the at least one second accommodation space.

The battery cell provided in this embodiment of this application is such arranged that the housing includes the first wall and the second wall, the first wall is bent along the circumferential direction of the first electrode assembly, and the first electrode assembly is arranged in the first accommodation space. In this way, when the battery cell shakes, the first electrode assembly is tilted and in surface contact with the first wall, which can increase a constraining force of the first wall on the electrode assembly, thereby enhancing the overall structural stability of the battery cell. In addition, as the second accommodation space is defined by the closed-loop virtual curved surface on which the first wall is located and the second wall, it is equivalent to increasing the space inside the battery cell for accommodating the electrolyte and the gas generated by the battery cell. Therefore, the battery cell provided in this embodiment of this application can improve the service life of the battery cell.

In some embodiments, the second accommodation space is provided in plurality, and no electrode assembly is accommodated in the second accommodation space. Such an arrangement is conducive to further prolonging the cycle life of the battery cell while ensuring the constraining force of the housing on the electrode assembly.

In some embodiments, a sum of volumes of the plurality of second accommodation spaces is less than a volume of the first accommodation space. This helps ensure the volumetric energy density of the battery cell.

In some embodiments, a sum of volumes of the first accommodation space and the second accommodation space is V, and the volume of the second accommodation space is V1, where $0.1 \leq V1/V \leq 0.4$. This is conducive to ensuring that the battery cell has sufficient space to accommodate the electrolyte and gas while also ensuring that the battery cell has a high volumetric energy density.

In some embodiments, the at least one electrode assembly further includes at least one second electrode assembly, and the at least one second electrode assembly is accommodated in the second accommodation space. This helps increase the volumetric energy density of the battery cell.

In some embodiments, the second accommodation space includes a first sub-space and at least one second sub-space, where the first sub-space is used for accommodating the second electrode assembly, and no second electrode assembly is accommodated in the second sub-space; and the second sub-space is enclosed by an outer surface of the second electrode assembly and a sub-wall portion of the second wall; or the second sub-space is enclosed by an outer surface of the second electrode assembly, the closed-loop virtual surface on which the first wall is located, and a sub-wall portion of the second wall. Such an arrangement can still achieve the purpose of increasing the space inside the battery cell for accommodating the electrolyte and gas.

In some embodiments, a sum of volumes of the first accommodation space and the second accommodation space is V, and the volume of the second sub-space is V2, where $0.1 \leq V2/V \leq 0.4$. This is conducive to ensuring that the battery cell has sufficient space to accommodate the electrolyte and gas while also ensuring that the battery cell has a high volumetric energy density.

In some embodiments, in a radial direction of the first electrode assembly, a maximum distance between the first wall and the first electrode assembly is less than a maximum distance between the second wall and the electrode assembly. Such an arrangement facilitates the formation of a space inside the battery cell for the electrolyte and the gas generated during the operation of the battery cell, thereby prolonging the cycle life of the battery cell.

In some embodiments, in the radial direction, the maximum distance between the first wall and the center of the first electrode assembly is L1, and the maximum distance between the second wall and the center of the electrode assembly is L2, where

$$1 < L2/L1 \leq \sqrt{2}$$

. Such an arrangement can reduce the risk of low volumetric energy density of the battery cell caused by an excessively large distance between the second wall and the electrode assembly, while ensuring that the second accommodation space has sufficient space to accommodate the electrolyte and the gas generated during the operation of the battery cell.

In some embodiments, the first wall is bent into an arc shape, and a portion of the electrode assembly is substantially cylindrical. In this way, when the battery cell shakes, the first wall and the first electrode assembly have a larger surface contact area formed, which helps increase the constraining force of the first wall on the first electrode assembly, thereby improving the operational reliability and service life of the battery cell.

In some embodiments, a central angle of the first wall ranges from 60° to 300°. This helps the first wall provide sufficient constraining force to the first electrode assembly when the battery cell shakes.

In some embodiments, the central angle of the first wall ranges from 90° to 270°. This helps the first wall further provide sufficient constraining force to the first electrode assembly when the battery cell shakes.

In some embodiments, the second wall includes a plurality of flat and straight walls, and the plurality of flat and straight walls are arranged to intersect with each other. This helps the second wall and the closed-loop virtual curved surface on which the first wall is located to enclose a larger second accommodation space, thereby increasing the volume of the battery cell that can accommodate the electrolyte and gas generated during the operation of the battery cell, which helps prolong the cycle life of the battery cell.

In some embodiments, the second wall includes an arc-shaped wall. Such an arrangement can still achieve the purpose of providing sufficient space inside the battery cell for the electrolyte and the gas generated during the operation of the battery cell.

In some embodiments, the battery cell further includes a first electrode terminal and a second electrode terminal, and the electrode assembly includes a main body portion, a first tab, and a second tab, where the first tab is electrically connected to the first electrode terminal, and the second tab is electrically connected to the second electrode terminal. In this way, during the operation of the battery cell, the housing can remain uncharged, which helps further prolong the cycle service life of the battery cell.

In some embodiments, the housing further includes a third wall, where the first wall and the second wall respectively extend along a thickness direction of the third wall, the first electrode terminal and the second electrode terminal are arranged on the third wall, the first tab is led out from an end of the main body portion along the thickness direction facing away from the third wall, and the second tab is led out from an end of the main body portion along the thickness direction facing the third wall. This helps increase the volumetric energy density of the battery formed by battery cells and the operational safety of the battery cells.

In some embodiments, the battery cell further includes a current collecting member, where the current collecting member is at least partially arranged in the second accommodation space and is used for connecting the first electrode terminal and the first tab. Such an arrangement facilitates the connection of the first electrode terminal and the first tab and the second accommodation space can be used to reasonably arrange the position of the current collecting member to ensure that the battery cell still has a high volumetric energy density after the current collecting member is arranged.

According to a second aspect, an embodiment of this application provides a battery including the battery cell according to any one of the foregoing embodiments.

The battery provided in this embodiment of this application has the same technical effect as the battery cell provided in any of the foregoing embodiments, and therefore will not be described in detail herein again.

In some embodiments, the first wall is bent into an arc shape, and the central angle of the first wall is less than or equal to 180°; a portion of the electrode assembly is substantially cylindrical, and the second wall includes a flat and straight wall arranged opposite the first wall; a plurality of battery cells are arranged along a first direction to form a battery cell column, and a plurality of battery cell columns are arranged along a second direction, where the second direction and the first direction intersect with each other, at least some of the first walls of two adjacent battery cell columns are arranged oppositely, and the two oppositely arranged columns of the first walls are staggered along the first direction. Such an arrangement helps increase the volumetric energy density of the battery.

In some embodiments, the battery further includes a heat exchange element, where the heat exchange element is used for performing heat exchange with the battery cell, the heat exchange element is arranged between the first walls of two adjacent battery cell columns, and the heat exchange element includes a first arc-shaped region and a second arc-shaped region, where at least some of the first walls of one of the two adjacent battery cell columns abut against the first arc-shaped region, and at least some of the first walls of the other column abuts against the second arc-shaped region. Such an arrangement helps improve the efficiency of heat exchange between the heat exchange element and the battery cell.

According to a third aspect, this application provides an electric apparatus including the battery in the foregoing embodiments, where the battery is configured to supply electric energy.

The electric apparatus provided in this embodiment of this application has the same technical effects as the battery provided in any one of the foregoing embodiments, and therefore will not be described in detail herein again.

## BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.

FIG. 1 is a schematic structural diagram of a vehicle according to an embodiment of this application;
FIG. 2 is a schematic structural diagram of a battery according to an embodiment of this application;
FIG. 3 is a schematic structural diagram of a battery module according to an embodiment of this application;
FIG. 4 is a schematic exploded view of a structure of a battery cell according to an embodiment of this application;
FIG. 5 is a schematic cross-sectional view of a structure of a battery cell according to an embodiment of this application;
FIG. 6 is another schematic cross-sectional view of a structure of a battery cell according to an embodiment of this application;
FIG. 7 is still another schematic cross-sectional view of a structure of a battery cell according to an embodiment of this application;
FIG. 8 is yet another schematic cross-sectional view of a structure of a battery cell according to an embodiment of this application;
FIG. 9 is a further schematic structural diagram of a battery cell according to an embodiment of this application;
FIG. 10 is a further schematic structural diagram of a battery cell according to an embodiment of this application;
FIG. 11 is a further schematic structural diagram of a battery cell according to an embodiment of this application;
FIG. 12 is a further schematic structural diagram of a battery cell according to an embodiment of this application;

FIG. 13 is another schematic exploded view of a structure of a battery cell according to an embodiment of this application;
FIG. 14 is a schematic structural diagram of a battery cell according to an embodiment of this application with an electrode assembly and a portion of a housing omitted; and

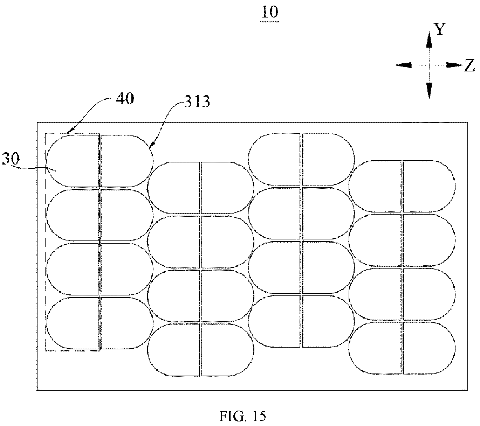

FIG. 15 is another schematic structural diagram of a battery according to an embodiment of this application.

In the accompanying drawings, the figures are not necessarily drawn to scale.
Description of reference signs:

1. vehicle; 1a. motor; 1b. controller;
10. battery; 11. first box portion; 12. second box portion;
20. battery module;
30. battery cell; 30a. first accommodation space; 30b. second accommodation space; 31b. first sub-space; 32b. second sub-space;
31. housing; 311. shell; 312. end cover; 313. first wall; 314. second wall; 315. third wall;
32. electrode assembly; 321. main body portion; 322. first tab; 323. second tab; 324. first electrode assembly; 325. second electrode assembly;
33. first electrode terminal; 33a. first concave portion; 34. second electrode terminal; 34a. second concave portion; 35. current collecting member; 36. adapter member;
40. battery cell column;
X. thickness direction; Y. first direction; and Z. second direction.

## DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "joining", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application describes an associative relationship that indicates three possible relationships, for example, C and/or D can mean: the existence of only C, the existence of both C and D, or the existence of only D. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In this application, "a plurality of" means more than two (inclusive).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes. This is not limited in the embodiments of this application either. Battery cells are typically divided into three types by packaging method: cylindrical cell, prismatic cell, and pouch cell. The type of the battery cell is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector. The positive electrode current collector includes a positive electrode current collecting portion and a positive electrode convex portion protruding from the positive electrode current collecting portion. The positive electrode current collecting portion is coated with the positive electrode active substance layer, at least part of the positive electrode convex portion is coated with no positive electrode active substance layer, and the positive electrode convex portion is used as a positive electrode tab. A lithium-ion battery is used as an example. The positive electrode current collector may be made of aluminum, the positive electrode active substance layer includes a positive electrode active substance, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. The negative electrode current collector includes a negative electrode current collecting portion and a negative electrode convex portion protruding from the negative electrode current collecting portion. The negative electrode current collecting portion is coated with the negative electrode active substance layer, at least part of the negative electrode convex portion is coated with no negative electrode active substance layer, and the negative electrode convex portion is used as a negative electrode tab. The negative electrode current collector may be made of copper, the negative electrode active substance layer includes a negative electrode active substance, and the negative electrode active substance may be carbon, silicon, or the like. To allow a high current to pass through without any fusing, a plurality of positive electrode tabs are provided and stacked together, and a plurality of negative electrode tabs are provided and stacked together. The separator may be made of PP (polypropylene, polypropylene), PE (polyethylene, polyethylene), or the like. In addition, the electrode assembly may be a wound structure or a laminated structure. However, the embodiments of this application are not limited thereto.

After discovering the problem of low service life of the battery cell, the inventor systematically analyzed and studied the structure and working process of the battery cell. The inventor found that for electrode assemblies with an arc-shaped region, if a square housing is used, the contact between the square housing and the arc-shaped region of the electrode assembly is line contact. Under conditions such as shaking of the battery cell, as the arc-shaped region of the electrode assembly is substantially in line contact with the housing, the housing has an insufficient constraining force on the arc-shaped region, which easily causes the electrode assembly to shake relative to the housing, thereby easily reducing the service life of the battery cell. If a cylindrical housing is used, a gap between the housing and the electrode assembly is relatively small, and a capacity of the housing in which the electrolyte may be accommodated is relatively small. Additionally, as a quantity of charge and discharge cycles of the battery cell increases, more gas is gradually generated inside the battery cell. Because the gap inside the housing is relatively small, a volume of gas that can be accommodated is also relatively small, which also shortens the cycle life of the battery cell. Therefore, both square and cylindrical housings will affect the cycle life of the battery cell.

Based on the foregoing problem found by the inventor, the inventor has improved the structure of batteries. The technical solution described in the embodiments of this application is applicable to batteries, batteries containing battery cells, and electric apparatuses using a battery.

A battery cell provided in the embodiments of this application includes a housing and at least one electrode assembly. The housing includes a first wall and a second wall, where the first wall and the second wall enclose a first accommodation space and at least one second accommodation space. The at least one electrode assembly includes a first electrode assembly arranged in the first accommodation space. The first wall is bent along a circumferential direction of the first electrode assembly, and the second wall is connected to one end of the first wall along the circumferential direction. A closed-loop virtual curved surface on which the first wall is located defines the first accommodation space, and a closed-loop virtual curved surface on which the first wall is located and the second wall define the at least one second accommodation space.

The battery cell provided in the embodiments of this application is provided with such housing having the first wall and the second wall, where the first wall is bent along the circumferential direction of the first electrode assembly, which reduces the risk of misalignment of the electrode assembly relative to the housing when the battery cell shakes, and is provided with such second accommodation space to provide sufficient space in the housing for the electrolyte and the gas generated during the cycling operation of the battery cell. Therefore, the battery cell provided in the embodiments of this application can improve the service life of the battery cell.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric apparatus being a vehicle is used as example for description of the following embodiments.

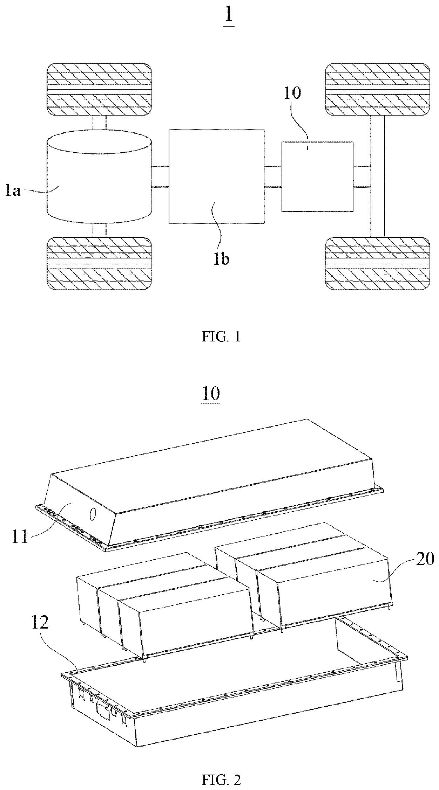

As shown in FIG. 1, the vehicle 1 is provided with a battery 10 inside. The battery 10 may be provided at the bottom, head, or tail of the vehicle 1. The battery 10 may be configured to supply power to the vehicle 1. For example, the battery 10 may be used as an operational power source for the vehicle 1.

The vehicle 1 may also include a controller 1b and a motor 1a. The controller 1b is configured to control the battery 10 to supply power to the motor 1a, for example, to satisfy power needs of starting, navigation, and driving of the vehicle 1.

In some embodiments of this application, the battery 10 may be used as not only an operational power source for the vehicle 1 but also a traction power source for the vehicle 1, replacing or partially replacing fossil fuel or natural gas to provide driving traction for the vehicle 1.

As shown in FIG. 2, the battery 10 includes a battery cell (not shown in FIG. 2). The battery 10 may further include a box for accommodating the battery cell.

The box is configured to accommodate the battery cell, and the box may have various structures. In some embodiments, the box may include a first box portion 11 and a second box portion 12. The first box portion 11 and the second box portion 12 cover each other. The first box portion 11 and the second box portion 12 together define an accommodation space for the battery cell. The second box portion 12 may be a hollow structure with an opening at an end, the first box portion 11 is a plate-shaped structure, and the first box portion 11 is engaged with the opening side of the second box portion 12 to form the box having an accommodation space. Both the first box portion 11 and the second box portion 12 may be hollow structures with an opening at a side. The opening side of the first box portion 11 is engaged with the opening side of the second box portion 12 to form a box with an accommodation space. Certainly, the first box portion 11 and the second box portion 12 may be in various shapes, such as cylinder or cuboid.

In order to improve airtightness after connection of the first box portion 11 and the second box portion 12, a sealing member such as sealing gum and sealing ring may further be arranged between the first box portion 11 and the second box portion 12.

Assuming that the first box portion 11 is engaged with the second box portion 12, the first box portion 11 may also be referred to as an upper cover, and the second box portion 12 may also be referred to as a lower box.

There may be one or more battery cells in the battery 10. If the battery cell is provided in plurality, the plurality of battery cells may be connected in series, parallel, or series-parallel. Being connected in series-parallel means a combination of series and parallel connections of the plurality of battery cells. The plurality of battery cells may be directly connected in series, parallel, or series-parallel, and then an entirety of the plurality of battery cells is accommodated in the box; or the plurality of battery cells may be connected in series, parallel, or series-parallel first to form a battery module 20. The plurality of battery modules 20 are then connected in series, parallel, or series-parallel to form an entirety which is accommodated in the box.

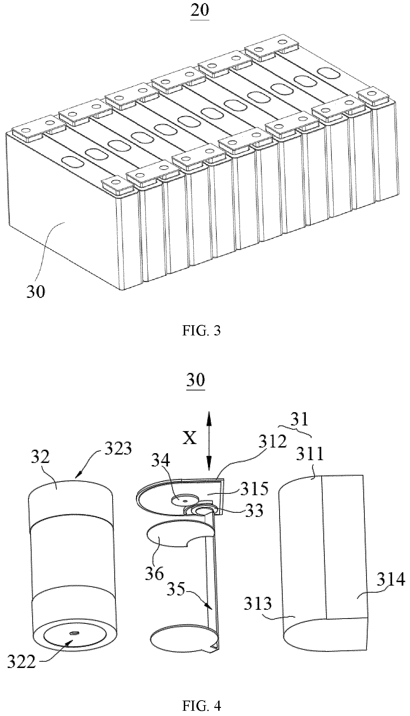

In some embodiments, referring to FIG. 3, FIG. 3 is a schematic structural diagram of the battery module 20 shown in FIG. 2. In the battery module 20, there are a plurality of battery cells 30. The plurality of battery cells 30 are connected in series, parallel, or series-parallel first to form battery modules 20. The plurality of battery modules 20 are then connected in series, parallel, or series-parallel to form an entirety which is accommodated in the box.

In some embodiments, the plurality of battery cells 30 in the battery module 20 may be electrically connected via a busbar, so that the plurality of battery cells 30 in the battery module 20 are connected in series, parallel, or series-parallel.

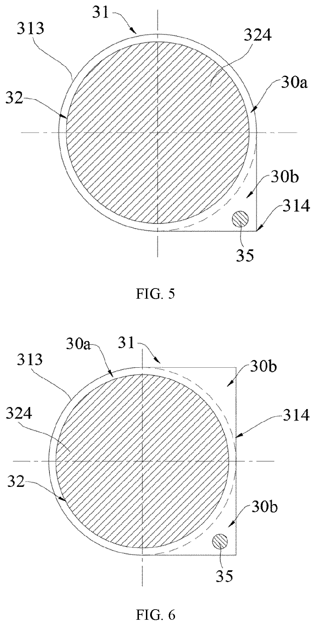

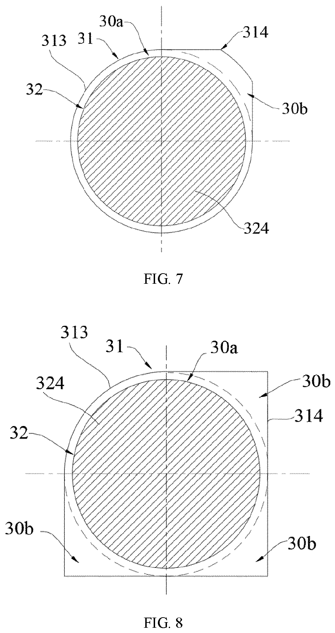

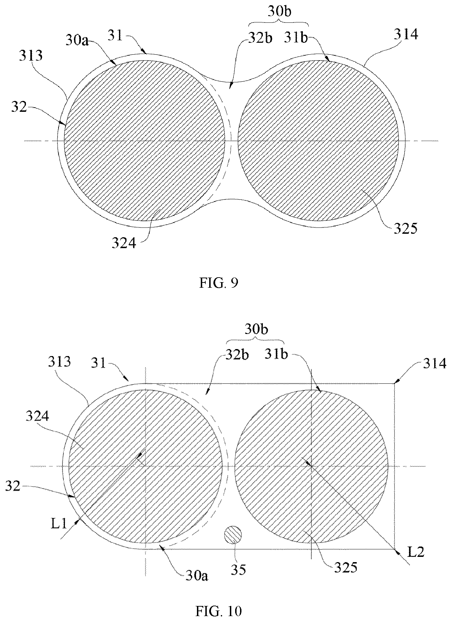

Referring to FIG. 4, FIG. 4 is a schematic exploded view of the battery cell 30 shown in FIG. 3. FIG. 5 to FIG. 12 respectively show schematic cross-sectional diagrams of different battery cells provided in the embodiments of this application.

As shown in FIG. 4 to FIG. 12, the battery cell 30 provided in an embodiment of this application includes a housing 31 and at least one electrode assembly 32. The housing 31 includes a first wall 313 and a second wall 314, where the first wall 313 and the second wall 314 enclose a first accommodation space 30a and at least one second accommodation space 30b. The at least one electrode assembly 32 includes a first electrode assembly 324 arranged in the first accommodation space 30a. The first wall 313 is bent along a circumferential direction of the first electrode assembly 324, and the second wall 314 is connected to an end of the first wall 313 along the circumferential direction. A closed-loop virtual curved surface on which the first wall 313 is located defines the first accommodation space 30a, and a closed-loop virtual curved surface on which the first wall 313 is located and the second wall 314 define the at least one second accommodation space 30b.

In some embodiments, the housing 31 may include a shell 311 and an end cover 312, where the shell 311 is a hollow structure with an opening on one side, and the end cover 312 is engaged with the opening of the shell 311 to form a hermetical connection so as to form a hermetical space for accommodating the electrode assembly 32 and the electrolyte.

During assembly of the battery cell 30, the electrode assembly 32 may be placed in the shell 311 first, then the end cover 312 is engaged with the opening of the shell 311, and an electrolyte is injected into the shell 311 through an electrolyte injection port on the end cover 312.

In some embodiments, the housing 31 may also be configured to accommodate an electrolyte such as a liquid electrolyte. The housing 31 may have various structure forms.

The shell 311 may be made of various materials, such as copper, iron, aluminum, stainless steel, and aluminum alloy, which are not particularly limited in the embodiments of this application.

The electrode assembly 32 in the shell 311 may be provided in one or plurality. In FIG. 4, the electrode assembly 32 accommodated in the shell 311 is one.

In some embodiments, the electrode assembly 32 further includes a negative electrode plate, a positive electrode plate, and a separator. The electrode assembly 32 may be a wound structure formed by the positive electrode plate, the separator, and the negative electrode plate through winding. The electrode assembly 32 may alternatively be a laminated structure formed by the positive electrode plate, the separator, and the negative electrode plate through lamination.

The positive electrode plate may include a positive electrode current collector and a positive electrode active substance layer. The positive electrode active substance layer is applied on a surface of the positive electrode current collector. The negative electrode plate may include a negative electrode current collector and a negative electrode active substance layer. The negative electrode active substance layer is applied on the surface of the negative electrode current collector. The separator is located between the positive electrode plate and the negative electrode plate to separate the positive electrode plate from the negative electrode plate, thereby reducing the risk of short circuit between the positive electrode plate and the negative electrode plate.

The separator may be made of PP (polypropylene, polypropylene), PE (polyethylene, polyethylene), or the like.

Tabs in the electrode assembly 32 are divided into a positive electrode tab and a negative electrode tab. The positive electrode tab may be a portion of the positive electrode current collector that is coated with no positive electrode active substance layer. The negative electrode tab may be a portion of the negative electrode current collector that is coated with no negative electrode active substance layer.

Optionally, along a circumferential direction of the first electrode assembly 324, the first electrode assembly 324 may have an arc-shaped region, and the first wall 313 may be bent along the circumferential direction of the first electrode assembly 324 to correspond to a part of the arc-shaped region, or the first wall 313 may be bent along the circumferential direction of the first electrode assembly 324 to correspond to the entire arc-shaped region.

Optionally, if the first wall 313 is bent along the circumferential direction of the first electrode assembly 324, minimum distances between all positions of the first wall 313 and the electrode assembly 32 may be set to be equal, or minimum distances between all positions of the first wall 313 and the electrode assembly 32 may be set to gradually change. For example, the first wall 313 may be a part of a cylinder, to be specific, radii of curvature of all positions corresponding to the first wall 313 are consistent, or the first wall 313 may be a part of a body with an elliptical cross-section, in which case radii of curvature of all positions corresponding to the first wall 313 vary.

Optionally, a central angle of the first wall 313 after being bent along the circumferential direction of the electrode assembly 32 may be any value between 90° and 270°. Certainly, it may alternatively be a value greater than 270° or less than 90°.

The closed-loop virtual curved surface on which the first wall 313 is located refers to a closed surface formed through enclosing along an edge of the first wall 313 according to an original trend of the first wall 313. For example, if the first wall 313 is a part of a cylindrical structure, the closed-loop virtual curved surface on which the first wall 313 is located is the entire cylindrical structure where the first wall 313 is located. For example, as shown in FIG. 5 to FIG. 11, the closed-loop virtual curved surface on which the first wall 313 is located is a curved surface enclosed by the first wall 313 and the dotted line portion and is closed and arranged along the circumferential direction of the first electrode assembly 324.

Optionally, the second wall 314 may be an arc-shaped wall, or the second wall 314 may be a flat and straight wall, or the second wall 314 may have both arc-shaped and flat and straight portions. The second wall 314 may be formed by a plurality of intersecting portions intersecting end to end.

Optionally, the second accommodation space 30b may accommodate the electrode assembly 32, or the second accommodation space 30b accommodate no electrode assembly 32.

It can be understood that because the first wall 313 is bent along the circumferential direction of the first electrode assembly 324, when the battery cell 30 shakes, the first electrode assembly 324 inside the battery cell 30 is tilted, and at least part of the first wall 313 is in surface contact with the first electrode assembly 324, which can increase a constraining force of the first wall 313 on the first electrode assembly 324.

Additionally, as the second accommodation space 30b is defined by the closed-loop virtual curved surface on which the first wall 313 is located and the second wall 314, a shape of the second accommodation space 30b relative to the electrode assembly 32 is not a regular space. Thus, whether or not the second accommodation space 30b accommodates the electrode assembly 32, there is always a sub-space in the second accommodation space 30b, where the sub-space cannot be used to accommodate the electrode assembly 32, but can be used to accommodate the electrolyte and, during the cycling operation of the battery cell 30, to accommodate the gas generated inside the battery cell 30.

The battery cell 30 provided in the embodiments of this application is such arranged that the housing 31 includes the first wall 313 and the second wall 314, and the first wall 313 is bent along the circumferential direction of the first electrode assembly 324, and the first electrode assembly 324 is arranged in the first accommodation space 30a. In this way, when the battery cell 30 shakes, the first electrode assembly 324 is tilted and in surface contact with the first wall 313, which can increase a constraining force of the first wall 313 on the first electrode assembly 324, thereby enhancing the overall structural stability of the battery cell 30. Additionally, as the second accommodation space 30b is defined by the closed-loop virtual curved surface on which the first wall 313 is located and the second wall 314, it is equivalent to effectively increasing the space inside the battery cell 30 for accommodating the electrolyte and the gas generated during the cycling operation of the battery cell 30. Therefore, the battery cell 30 provided in the embodiments of this application can prolong the cycle life of the battery cell 30.

In some embodiments, the second accommodation space 30b is provided in plurality, and no electrode assembly 32 is accommodated in the second accommodation space 30b.

If no electrode assembly 32 is accommodated in the second accommodation space 30b, the second accommodation space 30b may be used to accommodate a sufficient amount of electrolyte and gas. Such an arrangement is beneficial to further prolong the cycle life of the battery cell 30 while ensuring the constraining force of the housing 31 on the electrode assembly 32.

In some embodiments, a sum of volumes of the plurality of second accommodation spaces 30b is less than a volume of the first accommodation space 30a.

As the second accommodation space 30b may be provided in one or the second accommodation space 30b may be provided in plurality, in an embodiment where the second accommodation space 30b is provided in plurality, to increase the space inside the battery cell 30 for accommodating the electrolyte and gas, the sum of the volumes of the second accommodation spaces 30b is set to be less than the volume of the first accommodation space 30a, which helps ensure the volumetric energy density of the battery cell 30.

In some embodiments, a sum of volumes of the first accommodation space 30a and the second accommodation space 30b is V, and the volume of the second accommodation space 30b is V1, where $0.1 \leq V1/V \leq 0.4$.

Optionally, V1/V may be 0.1, 0.2, 0.3, 0.4, or the like. Setting the volumes of the first accommodation space 30a and the second accommodation space 30b to meet the foregoing relation is conducive to ensuring that the battery cell 30 has sufficient space to accommodate the electrolyte and gas while also ensuring that the battery cell 30 has a high volumetric energy density.

In some embodiments, the at least one electrode assembly 32 further includes at least one second electrode assembly 325, and the at least one second electrode assembly 325 is accommodated in the second accommodation space 30b.

Optionally, the second electrode assembly 325 may be provided in one or the second electrode assembly 325 may be provided in plurality. In an embodiment where the second electrode assembly 325 is provided in plurality, different second electrode assemblies 325 may be accommodated in different second accommodation spaces 30b, or the plurality of second electrode assemblies 325 may be jointly accommodated in the same second accommodation space 30b. The specific configuration may be set according to actual needs, and there is no limitation herein.

Optionally, a structure of the second electrode assembly 325 may be the same as or different from a structure of the first electrode assembly 324, and there is no limitation herein.

To be specific, the electrode assembly 32 is also arranged in the second accommodation space 30b, which helps increase the volumetric energy density of the battery cell 30 while ensuring sufficient space inside the battery cell 30 for accommodating the electrolyte and gas.

In some embodiments, the second accommodation space 30b includes a first sub-space 31b and at least one second sub-space 32b, where the first sub-space 31b is used for accommodating the second electrode assembly 325, and no second electrode assembly 325 is accommodated in the second sub-space 32b.

To be specific, the second accommodation space 30b includes the first sub-space 31b for accommodating the second electrode assembly 325 and the second sub-space 32b for accommodating the electrolyte and gas.

Optionally, the first sub-space 31b may be provided in one, or the first sub-space 31b may be provided in plurality. Similarly, the second sub-space 32b may be provided in one, or the second sub-space 32b may be provided in plurality, and the plurality of second sub-spaces 32b may be spaced apart from each other. For example, the plurality of second sub-spaces 32b are separated by the first sub-spaces 31b.

Optionally, the second sub-space 32b is enclosed by an outer surface of the second electrode assembly 325 and the second wall 314; or the second sub-space 32b is enclosed by an outer surface of the first electrode assembly 324, the closed-loop virtual surface on which the first wall 313 is located, and a sub-wall portion of the second wall 314.

In some embodiments, the second sub-space 32b is enclosed by the outer surface of the second electrode assembly 325 and a sub-wall portion of the second wall 314.

The sub-wall portion of the second wall 314 may be a portion of the second wall 314. In this embodiment, the sub-wall portion of the second wall 314 is a portion relatively close to a surface of the second electrode assembly 325. Specifically, the outer surface of the second electrode assembly 325 for enclosing the second sub-space 32b may be a portion of the second electrode assembly 325 arranged opposite the sub-wall portion of the second wall 314, in which case the second sub-space 32b is enclosed by the sub-wall portion of the second wall 314 and the portion of the second electrode assembly 325 arranged opposite the sub-wall portion of the second wall 314 and then virtually extending towards the sub-wall portion of the second wall 314.

In other words, in this embodiment, the second sub-space 32b is located on a side of the first sub-space 31b facing away from the first accommodation space 30a. Such an arrangement still achieves the purpose of increasing the space inside the battery cell 30 for accommodating the electrolyte and gas.

In some other embodiments, the second sub-space 32b is enclosed by the outer surface of the second electrode assembly 325, the closed-loop virtual surface on which the first wall 313 is located, and the sub-wall portion of the second wall 314.

The sub-wall portion of the second wall 314 may be a portion of the second wall 314 adjacent to the first wall 313, and the outer surface of the second electrode assembly 325 for enclosing the second sub-space 32b may be a portion of the second electrode assembly 325 adjacent to the first electrode assembly 324. The second sub-space 32b may be a closed space formed by the closed-loop virtual surface on which the first wall 313 is located, the portion of the second wall 314 adjacent to the first wall 313, and the portion of the second electrode assembly 325 adjacent to the first electrode assembly 324 and extending towards the second wall 314.

In other words, the second sub-space 32b is located between the first accommodation space 30a and the first sub-space 31b. Such an arrangement still can achieve the purpose of increasing the space inside the battery cell 30 for accommodating the electrolyte and the gas generated during the operation of the battery cell 30.

In some embodiments, a sum of volumes of the first accommodation space 30a and the second accommodation space 30b is V, and a volume of the second sub-space 32b is V2.

The volume of the second sub-space 32b is a volume used for accommodating the electrolyte and the gas generated by the battery cell 30 within the second accommodation space 30b.

Optionally, V2/V may be 0.1, 0.2, 0.3, 0.4, or the like. Setting the volumes of the second sub-space 32b, the first accommodation space 30a, and the second accommodation space 30b to meet the foregoing relation is conducive to ensuring that the battery cell 30 has sufficient space to accommodate the electrolyte and gas while also ensuring that the battery cell 30 has a high volumetric energy density.

In some embodiments, in a radial direction of the first electrode assembly 324, a maximum distance between the first wall 313 and the first electrode assembly 324 is less than a maximum distance between the second wall 314 and the electrode assembly 32.

Specifically, a distance between the first wall 313 and the first electrode assembly 324 is a minimum value of distances from all points on the first wall 313 to the first electrode assembly 324. As the distances from all points on the first wall 313 to the first electrode assembly 324 vary, the maximum distance between the first wall 313 and the first electrode assembly 324 may be a maximum value of the distances from all points on the first wall 313 to the first electrode assembly 324.

Similarly, a distance between the second wall 314 and the electrode assembly 32 may be a minimum value of distances from all points on the second wall 314 to a nearest electrode assembly 32, which may be a distance between the second wall 314 and the first electrode assembly 324 or a distance between the second wall 314 and the second electrode assembly 325, which needs to be specifically determined based on the arrangement of the electrode assembly 32 inside the battery cell 30. The maximum distance between the second wall 314 and the electrode assembly 32 is the maximum value of the distances from all points on the second wall 314 to the electrode assembly 32.

It can be understood that setting the maximum distance between the second wall 314 and the electrode assembly 32 to be greater than the maximum distance between the first wall 313 and the first electrode assembly 324 creates a larger space between the second wall 314 and the electrode assembly 32. This space is a portion of the second accommodation space 30b, or the space is the entire second accommodation space 30b. This larger space may be used for accommodating the electrolyte and the gas generated during the operation of the battery cell 30. Such an arrangement helps further prolong the cycle life of the battery cell 30.

In some embodiments, in the radial direction, the maximum distance between the first wall 313 and the center of the first electrode assembly 324 is L1, and the maximum distance between the second wall 314 and the center of the electrode assembly 32 is L2, where

$$1 < L2/L1 \le \sqrt{2}$$
.

Optionally, L2/L1 may be 1.1, 1.2, 1.3, 1.4, $\sqrt{2}$
, or the like,

Such an arrangement also reduces the risk of low volumetric energy density of the battery cell 30 caused by an excessively large distance between the second wall 314 and the electrode assembly 32, while ensuring that the second accommodation space 30b has sufficient space to accommodate the electrolyte and the gas generated during the operation of the battery cell 30.

In some embodiments, the first wall 313 is bent into an arc shape, and a portion of the electrode assembly 32 is substantially cylindrical.

If a portion of the electrode assembly 32 is substantially cylindrical, other portions of the electrode assembly 32, except for the tabs, may be substantially cylindrical. If the first wall 313 is bent into an arc shape, radii of curvature at all points of the first wall 313 are consistent, and the distances from all positions on the first wall 313 to the first electrode assembly 324 are approximately the same. In this way, when the battery cell 30 shakes, the first wall 313 and the first electrode assembly 324 have a larger surface contact area formed, which helps increase the constraining force of the first wall 313 on the first electrode assembly 324, thereby improving the operational reliability and service life of the battery cell 30.

In some embodiments, the central angle of the first wall 313 ranges from 60° to 300°.

Specifically, the central angle of the first wall 313 is a central angle of an arc corresponding to a cross section of the first wall 313. The central angle of the first wall 313 may be 60°, 90°, 120°, 150°, 180°, 210°, 240°, 270°, or 300°, or the like.

Setting the central angle of the first wall 313 to meet the foregoing conditions helps the first wall 313 provide sufficient constraining force to the first electrode assembly 324 when the battery cell 30 shakes.

In some embodiments, the central angle of the first wall 313 ranges from 90° to 270°.

Optionally, the central angle of the first wall 313 may be 90°, 120°, 150°, 180°, 210°, 240°, or 270°, or the like.

It can be understood that setting the central angle of the first wall 313 to further meet the foregoing conditions helps the first wall 313 provide further sufficient constraining force to the first electrode assembly 324 when the battery cell 30 shakes.

In some embodiments, the second wall 314 includes a plurality of flat and straight walls, and the plurality of flat and straight walls are arranged to intersect with each other.

Optionally, the second wall 314 may include two or three flat and straight walls, and sizes of the different flat and straight walls may be equal or unequal.

Included angles between the plurality of flat and straight walls may be right angles, or included angles between the plurality of flat and straight walls on a side facing the electrode assembly 32 may be obtuse angles.

It can be understood that setting the second wall 314 to include a plurality of flat and straight walls is conducive to allowing the second wall 314 and the closed-loop virtual curved surface on which the first wall 313 is located to enclose a larger second accommodation space 30b, thereby increasing the volume of the electrolyte and gas generated during operation of the battery cell 30 that can be accommodated in the battery cell 30, which helps prolong the cycle life of the battery cell 30.

In some embodiments, the second wall 314 includes an arc-shaped wall.

If the second wall 314 includes an arc-shaped wall, radii of curvature at all points of the arc-shaped wall of the second wall 314 are approximately equal. The second wall 314 may be entirely arc-shaped, or the second wall 314 may be partially arc-shaped. It can be understood that in an embodiment where both the first wall 313 and the second wall 314 are arc-shaped, a radius of curvature corresponding to the first wall 313 and a radius of curvature corresponding to the second wall 314 may be set to be different, so that the closed-loop virtual curved surface on which the first wall 313 is located and the second wall 314 enclose the second accommodation space 30b. Such an arrangement still can achieve the purpose of providing sufficient space for the electrolyte in the battery cell 30 and the gas generated during the operation of the battery cell 30.

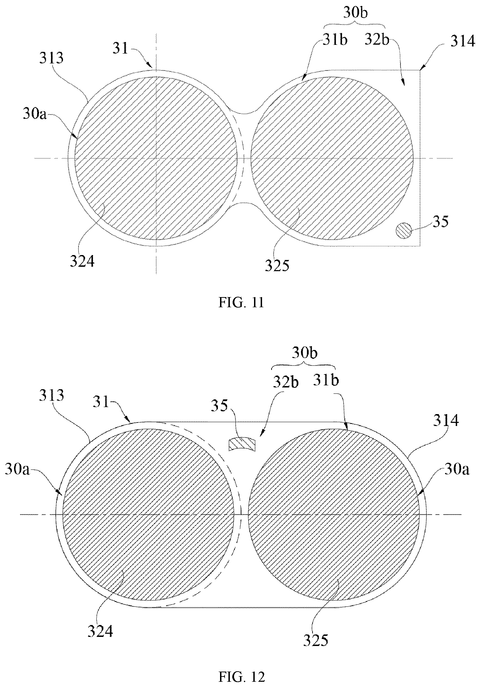

FIG. 12 is another schematic exploded view of a structure of the battery cell 30 according to an embodiment of this application.

As shown in FIG. 12, in some embodiments, the battery cell 30 further includes a first electrode terminal 33 and a second electrode terminal 34. The battery cell 30 includes a main body portion 321, a first tab 322, and a second tab 323, where the first tab 322 is electrically connected to the first electrode terminal 33, and the second tab 323 is electrically connected to the second electrode terminal 34.

Optionally, the first tab 322 may be set as a positive electrode tab and the second tab 323 as a negative electrode tab, or the first tab 322 may be set as a negative electrode tab and the second tab 323 as a positive electrode tab.

Optionally, the first electrode terminal 33 and the second electrode terminal 34 may be arranged at two ends of the housing 31 along an axial direction of the main body portion 321, or the first electrode terminal 33 and the second electrode terminal 34 may be arranged at the same end of the housing 31 along an axial direction of the main body portion 321.

Specifically, as the electrode assembly 32 includes the first tab 322 and the second tab 323, during the operation of the battery cell 30, the housing 31 may remain uncharged, which helps further prolong the cycle service life of the battery cell 30.

In some embodiments, the housing 31 further includes a third wall 315, where the first wall 313 and the second wall 314 respectively extend along a thickness direction X of the third wall 315, and the first electrode terminal 33 and the second electrode terminal 34 are arranged on the third wall 315. The first tab 322 is led out from an end of the main body portion 321 along the thickness direction X facing away from the third wall 315, and the second tab 323 is led out from an end of the main body portion 321 along the thickness direction X facing the third wall 315.

Specifically, the first electrode terminal 33 and the second electrode terminal 34 are both arranged on the first wall 313, the first tab 322 and the second tab 323 are arranged at two ends of the main body portion 321 along the thickness direction X, and the first tab 322 is arranged at an end of the main body portion 321 along the thickness direction X facing away from the first wall 313. In this way, the first electrode terminal 33 and the positive electrode plate may be connected through a conductive member.

Optionally, the conductive member connecting the first electrode terminal 33 and the positive electrode plate may be arranged inside the electrode assembly 32, or may be arranged outside the electrode assembly 32, which may be arranged depending on the need.

It can be understood that arranging both the first electrode terminal 33 and the second electrode terminal 34 on the third wall 315 means that an opposite end of the battery cell 30 along the thickness direction X relative to the third wall 315 does not need to have the first electrode terminal 33 or the second electrode terminal 34 arranged. In this way, in the process of connecting the battery cells 30 to each other through busbars, a quantity and occupied volume of the busbars may be reduced. Additionally, as the housing 31 may remain uncharged during the operation of the battery cell 30, such an arrangement improves the operational safety of the battery cell 30 while also increasing the volumetric energy density of the battery 10.

In some embodiments, the battery cell 30 further includes a current collecting member 35, where the current collecting member 35 is at least partially arranged in the second accommodation space 30b and is configured to electrically connect the first electrode terminal 33 and the first tab 322.

Specifically, in an embodiment where the battery cell 30 includes a plurality of electrode assemblies 32, the current collecting member 35 connects the first tabs 322 of the plurality of electrode assemblies 32 and is connected to the first electrode terminal 33.

If the current collecting member 35 is at least partially arranged in the second accommodation space 30b, the second accommodation space 30b is used to arrange the current collecting member 35, which facilitates the connection between the first electrode terminal 33 and the first tab 322. As the second accommodation space 30b is an irregular space, the second accommodation space 30b may be used to reasonably arrange the position of the current collecting member 35 to ensure that the battery cell 30 still has a high volumetric energy density after the current collecting member 35 is arranged.

Optionally, a cross-sectional shape of the current collecting member 35 along a direction perpendicular to the thickness direction X may be circular, rectangular, elliptical, annular, arc-shaped, or the like.

Optionally, the current collecting member 35 may be connected to the first electrode terminal 33 through welding or riveting.

In an embodiment where the current collecting member 35 is connected to the first electrode terminal 33 through welding, a first concave portion 33a may be provided on a side of the first electrode terminal 33 facing away from the electrode assembly 32, and a bottom wall of the first concave portion 33a abuts against the current collecting member 35 and is welded to the current collecting member 35.

In this case, the current collecting member 35 and the first tab 322 may be connected through penetration welding from a side of the third wall 315 facing away from the electrode assembly 32 through the first electrode terminal 33.

As the second tab 323 is arranged at an end of the electrode assembly 32 close to the third wall 315, optionally, the second tab 323 and the second electrode terminal 34 may be directly connected. For example, the second tab 323 and the second electrode terminal 34 may be directly welded together. Alternatively, the second tab 323 and the second electrode terminal 34 may be connected through an intermediate connection member.

In some embodiments, the battery cell 30 further includes an adapter member 36, where the adapter member 36 connects the second electrode terminal 34 and the second tab 323.

Optionally, the adapter member 36 may be in a form of sheet or may be bent into plurality of folds.

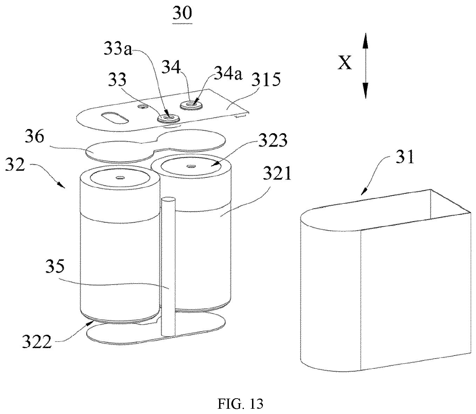

As shown in FIG. 13, in an embodiment where the adapter member 36 is in a form of sheet, a second concave portion 34a may be provided on a side of the second electrode terminal 34 facing away from the electrode assembly 32, and a bottom wall of the second concave portion 34a abuts against the adapter member 36 and is welded to the adapter member 36. This allows the second electrode terminal 34, the adapter member 36, and the second tab 323 to be connected through penetration welding.

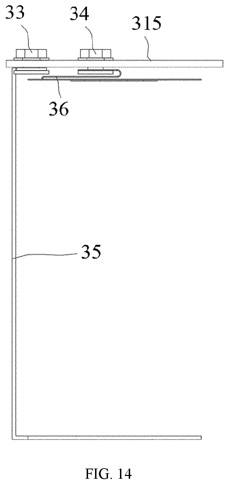

As shown in FIG. 14, in an embodiment where the adapter member 36 is bent into a plurality of folds, as there is enough space, the adapter member 36 and the second electrode terminal 34 as well as the adapter member 36 and the second tab 323 can be respectively welded together from a side of the second electrode terminal 34 close to the adapter member 36.

It can be understood that for the battery cell 30 with a plurality of electrode assemblies 32, arrangement of the adapter member 36 allows the plurality of second tabs 323 to be connected through the adapter member 36, which facilitates the connection of the plurality of second tabs 323 to the same second electrode terminal 34, thereby improving the installation convenience of the battery cell 30.

It can be understood that as the second tab 323 is arranged at the end of the main body portion 321 close to the third wall 315, the second electrode terminal 34 may be arranged at a position on the third wall 315 opposite any one of the second tabs 323, which facilitates the electrical connection between the second electrode terminal 34 and the second tab 323.

A battery 10 provided in the embodiments of this application includes the battery cell 30 according to any one of the foregoing embodiments.

The battery 10 provided in the embodiments of this application has the same technical effects as the battery cell 30 provided in any one of the foregoing embodiments, and therefore will not be described in detail herein.

FIG. 13 is another schematic structural diagram of the battery 10 according to an embodiment of this application.

As shown in FIG. 13, in some embodiments, the first wall 313 is bent into an arc shape, and the central angle of the first wall 313 is less than or equal to 180°. A portion of the electrode assembly 32 is substantially cylindrical, and the second wall 314 includes a flat and straight wall arranged opposite the first wall 313. A plurality of battery cells 30 are arranged along the first direction Y to form a battery cell column 40, and a plurality of battery cell columns 40 are arranged along a second direction Z, where the second direction Z intersects with the first direction Y. At least some of the first walls 313 of two adjacent battery cell columns 40 are arranged oppositely, and the two oppositely arranged columns of the first walls 313 are staggered along the first direction Y.

Optionally, an included angle between the second direction Z and the first direction Y may be an acute angle, an obtuse angle, or a right angle. For example, the first direction Y and the second direction Z may be perpendicular to each other.

Optionally, the first walls 313 of every adjacent two battery cell columns 40 may be arranged to face in opposite directions, so that the first walls 313 of every battery cell column 40 have the first walls 313 of another adjacent battery cell column 40 arranged opposite thereto. Alternatively, some of the first walls 313 of adjacent battery cell columns 40 may be arranged in opposite directions, so that at least some of the first walls 313 of two adjacent battery cell columns 40 are arranged opposite each other.

Similarly, as at least some of the first walls 313 of two adjacent battery cell columns 40 are arranged opposite each other, correspondingly, at least some of the second walls 314 of two adjacent battery cell columns 40 are arranged opposite each other. As the second wall 314 includes a flat and straight wall arranged opposite the first wall 313, at least some of the second walls 314 of two adjacent battery cell columns 40 are arranged opposite each other.

It can be understood that the flat and straight walls of the second walls 314 of two adjacent battery cell columns 40 arranged opposite each other helps reduce a gap between two adjacent battery cell columns 40 during arrangement of the battery cells 30. Similarly, as the first wall 313 is arc-shaped and the two oppositely arranged first walls 313 are staggered along the first direction Y, setting at least some of the first walls 313 of two adjacent battery cell columns 40 to be arranged opposite each other also helps reduce the gap between two adjacent battery cell columns 40. Therefore, such an arrangement helps increase the volumetric energy density of the battery 10.

In some embodiments, the battery 10 further includes a heat exchange element, where the heat exchange element is configured to perform heat exchange with the battery cell 30. The heat exchange element is arranged between the first walls 313 of two adjacent battery cell columns 40, and the heat exchange element includes a first arc-shaped region and a second arc-shaped region. At least some of the first walls 313 of one of the two adjacent battery cell columns 40 abut against the first arc-shaped region, and at least some of the first walls 313 of the other column abuts against the second arc-shaped region.

Specifically, the first arc-shaped region is adapted to the shape of the first wall 313 of one battery cell column 40, and the second arc-shaped region is adapted to the shape of the first walls 313 of another adjacent column of battery cells 30. In this way, the purpose of the heat exchange element being in surface contact with the first walls 313 of two adjacent battery cell columns 40 can be achieved, which helps improve the efficiency of heat exchange between the heat exchange element and the battery cells 30.

An electric apparatus provided in an embodiment of this application includes the battery 10 according to any one of the foregoing embodiments, where the battery 10 is configured to supply electric energy.

The electric apparatus provided in this embodiment of this application has the same technical effects as the battery 10 provided in any of the foregoing embodiments, and therefore will not be described in detail herein.

It should be noted that in absence of conflicts, some embodiments and features in some embodiments in this application may be combined with each other.

In conclusion, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in the embodiments of this application.

## Claims

1. A battery cell, comprising:

    a housing, comprising a first wall and a second wall, wherein the first wall and the second wall enclose a first accommodation space and at least one second accommodation space; and
    at least one electrode assembly, comprising a first electrode assembly arranged in the first accommodation space;
    wherein the first wall is bent along a circumferential direction of the first electrode assembly, the second wall is connected to an end of the first wall along the circumferential direction, a closed-loop virtual curved surface on which the first wall is located defines the first accommodation space, and a closed-loop virtual curved surface on which the first wall is located and the second wall define the at least one second accommodation space.

2. The battery cell according to claim 1, wherein the second accommodation space is provided in plurality, and no electrode assembly is accommodated in the second accommodation space.

3. The battery cell according to claim 2, wherein a sum of volumes of the plurality of second accommodation spaces is less than a volume of the first accommodation space.

4. The battery cell according to claim 3, wherein a sum of volumes of the first accommodation space and the second accommodation space is V, and the volume of the second accommodation space is V1, wherein $0.1 \leq V1/V \leq 0.4$.

5. The battery cell according to claim 1, wherein the at least one electrode assembly further comprises at least one second electrode assembly, and the at least one second electrode assembly is accommodated in the second accommodation space.

6. The battery cell according to claim 5, wherein the second accommodation space comprises a first sub-space and at least one second sub-space, the first sub-space is used for accommodating the second electrode assembly, and no second electrode assembly is accommodated in the second sub-space; and

the second sub-space is enclosed by an outer surface of the second electrode assembly and a sub-wall portion of the second wall; or the second sub-space is enclosed by an outer surface of the second electrode assembly, the closed-loop virtual surface on which the first wall is located, and a sub-wall portion of the second wall.

7. The battery cell according to claim 6, wherein a sum of volumes of the first accommodation space and the second accommodation space is V, and the volume of the second sub-space is V2, wherein $0.1 \leq V2/V \leq 0.4$.

8. The battery cell according to any one of claims 1 to 7, wherein in a radial direction of the first electrode assembly, a maximum distance between the first wall and the first electrode assembly is less than a maximum distance between the second wall and the electrode assembly.

9. The battery cell according to claim 8, wherein in the radial direction, the maximum distance between the first wall and the center of the first electrode assembly is L1, and the maximum distance between the second wall and the center of the electrode assembly is L2, wherein $1 < L2/L1 \leq \sqrt{2}$.

10. The battery cell according to claim 8 or 9, wherein the first wall is bent into an arc shape, and a portion of the electrode assembly is substantially cylindrical.

11. The battery cell according to claim 10, wherein a central angle of the first wall ranges from 60° to 300°.

12. The battery cell according to claim 11, wherein the central angle of the first wall ranges from 90° to 270°.

13. The battery cell according to any one of claims 8 to 12, wherein the second wall comprises a plurality of flat and straight walls, and the plurality of flat and straight walls are arranged to intersect with each other.

14. The battery cell according to any one of claims 8 to 12, wherein the second wall comprises an arc-shaped wall.

15. The battery cell according to any one of claims 1 to 14, wherein the battery cell further comprises a first electrode terminal and a second electrode terminal; and

the electrode assembly comprises a main body portion, a first tab, and a second tab, wherein the first tab and the second tab have opposite polarities, the first tab is electrically connected to the first electrode terminal, and the second tab is electrically connected to the second electrode terminal.

16. The battery cell according to claim 15, wherein the housing further comprises a third wall, the first wall and the second wall respectively extend along a thickness direction of the third wall, and the first electrode terminal and the second electrode terminal are arranged on the third wall; and

the first tab is led out from an end of the main body portion along the thickness direction facing away from the third wall, and the second tab is led out from an end of the main body portion along the thickness direction facing the third wall.

17. The battery cell according to claim 16, wherein the battery cell further comprises a current collecting member, and the current collecting member is at least partially arranged in the second accommodation space and is used for connecting the first electrode terminal and the first tab.

18. A battery, comprising the battery cell according to any one of claims 1 to 17.

19. The battery according to claim 18, wherein the first wall is bent into an arc shape, and a central angle of the first wall is less than or equal to 180°; and a portion of the electrode assembly is substantially cylindrical; and the second wall comprises a flat and straight wall arranged opposite the first wall;

a plurality of battery cells are arranged along a first direction to form a battery cell column, and a plurality of battery cell columns are arranged along a second direction, wherein the second direction intersects with the first direction; and at least some of the first walls of two adjacent battery cell columns are arranged oppositely, and the two oppositely arranged columns of the first walls are staggered along the first direction.

20. The battery according to claim 19, wherein the battery further comprises a heat exchange element, and the heat exchange element is used for performing heat exchange with the battery cell; and

the heat exchange element is arranged between the first walls of two adjacent battery cell columns, and the heat exchange element comprises a first arc-shaped region and a second arc-shaped region, wherein at least some of the first walls of one of the two adjacent battery cell columns abut against the first arc-shaped region, and at least some of the first walls of the other column abuts against the second arc-shaped region.

21. An electric apparatus, comprising the battery according to any one of claims 18 to 20, wherein the battery is configured to supply electric energy.

<u>1</u>

FIG. 1

<u>10</u>

FIG. 2

<u>20</u>

FIG. 3

<u>30</u>

FIG. 4

FIG. 5

FIG. 6

FIG. 7

FIG. 8

FIG. 9

FIG. 10

FIG. 11

FIG. 12

FIG. 13

FIG. 14

FIG. 15

## INTERNATIONAL SEARCH REPORT

International application No.

**PCT/CN2022/095024**

### A. CLASSIFICATION OF SUBJECT MATTER

H01M50/244(2021.01)i;H01M50/249(2021.01)i;H01M10/613(2014.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 电池, 圆柱状, 壳, 弧, 弯折, 电解液, battery, cylindrical, shell, arc, bend, electrolyte

### C. DOCUMENTS CONSIDERED TO BE RELEVANT

| Category* | Citation of document, with indication, where appropriate, of the relevant passages | Relevant to claim No. |
|---|---|---|
| X | CN 216389611 U (CONTEMPORARY AMPEREX TECHNOLOGY CO., LTD.) 26 April 2022 (2022-04-26) <br> description, paragraphs 4-66, and figures 3-6 | 1-4, 8-16 |
| Y | CN 216389611 U (CONTEMPORARY AMPEREX TECHNOLOGY CO., LTD.) 26 April 2022 (2022-04-26) <br> description, paragraphs 4-66, and figures 3-6 | 5-7 |
| Y | CN 216015508 U (CONTEMPORARY AMPEREX TECHNOLOGY CO., LTD.) 11 March 2022 (2022-03-11) <br> description, paragraphs 51-93, and figures 2-9 | 5-7 |
| X | CN 202395102 U (SHENZHEN WISEWOD TECHNOLOGY CO., LTD.) 22 August 2012 (2012-08-22) <br> description, paragraphs 3-36, and figures 1-4 | 1, 5-16 |
| X | CN 1755966 A (SAMSUNG SDI CO., LTD.) 05 April 2006 (2006-04-05) <br> description, page 4, line 2-page 6, line 17, and figures 3-11 | 1-4, 8-16 |
| Y | CN 1755966 A (SAMSUNG SDI CO., LTD.) 05 April 2006 (2006-04-05) <br> description, page 4, line 2-page 6, line 17, and figures 3-11 | 5-7 |

☑ Further documents are listed in the continuation of Box C.    ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 February 2023** | **22 February 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/095024**

**C.    DOCUMENTS CONSIDERED TO BE RELEVANT**

| Category* | Citation of document, with indication, where appropriate, of the relevant passages | Relevant to claim No. |
|---|---|---|
| X | JP 2003151507 A (MATSUSHITA ELECTRIC IND. CO., LTD.) 23 May 2003 (2003-05-23) description, paragraphs 5-31, and figures 1-10 | 1-4, 8-16 |
| Y | JP 2003151507 A (MATSUSHITA ELECTRIC IND. CO., LTD.) 23 May 2003 (2003-05-23) description, paragraphs 5-31, and figures 1-10 | 5-7 |
| X | CN 209981391 U (ZHEJIANG TIANNENG ENERGY TECHNOLOGY CO., LTD.) 21 January 2020 (2020-01-21) description, paragraphs 5-28, and figure 1 | 1, 5-16 |
| A | CN 216120503 U (CONTEMPORARY AMPEREX TECHNOLOGY CO., LTD.) 22 March 2022 (2022-03-22) entire document | 1-16 |
| A | CN 112768748 A (JIANGSU CONTEMPORARY AMPEREX TECHNOLOGY LTD.) 07 May 2021 (2021-05-07) entire document | 1-16 |

Form PCT/ISA/210 (second sheet) (July 2022)

**INTERNATIONAL SEARCH REPORT**
Information on patent family members

International application No.

**PCT/CN2022/095024**

| Patent document cited in search report | | | Publication date (day/month/year) | Patent family member(s) | | | Publication date (day/month/year) |
|---|---|---|---|---|---|---|---|
| CN | 216389611 | U | 26 April 2022 | None | | | |
| CN | 216015508 | U | 11 March 2022 | None | | | |
| CN | 202395102 | U | 22 August 2012 | None | | | |
| CN | 1755966 | A | 05 April 2006 | US | 2010248013 | A1 | 30 September 2010 |
| | | | | US | 8216716 | B2 | 10 July 2012 |
| | | | | KR | 20060029749 | A | 07 April 2006 |
| | | | | KR | 100646522 | B1 | 15 November 2006 |
| | | | | US | 2006099499 | A1 | 11 May 2006 |
| | | | | JP | 2010219060 | A | 30 September 2010 |
| | | | | JP | 5190488 | B2 | 24 April 2013 |
| | | | | JP | 2006108096 | A | 20 April 2006 |
| JP | 2003151507 | A | 23 May 2003 | JP | 3811388 | B2 | 16 August 2006 |
| CN | 209981391 | U | 21 January 2020 | None | | | |
| CN | 216120503 | U | 22 March 2022 | None | | | |
| CN | 112768748 | A | 07 May 2021 | CN | 112768748 | B | 03 August 2021 |
| | | | | US | 2022328883 | A1 | 13 October 2022 |
| | | | | WO | 2022213306 | A1 | 13 October 2022 |

Form PCT/ISA/210 (patent family annex) (July 2022)